# EUROPÄISCHE PATENTSCHRIFT

(11) **EP 2 067 001 B1**
(45) Veröffentlichungstag und Bekanntmachung des Hinweises auf die Patenterteilung: **12.08.2015**
(21) Anmeldenummer: 07803057.4
(22) Anmeldetag: 30.08.2007
(51) Int. Cl.: G01B 7/14, G01B 15/00

(54) **VORRICHTUNG ZUR BESTIMMUNG DES ABSTANDS ZWISCHEN EINER LAUFSCHAUFEL UND EINER DIE LAUFSCHAUFEL UMGEBENDEN WANDUNG EINER STRÖMUNGSMASCHINE**
DEVICE FOR DETERMINING THE DISTANCE BETWEEN A ROTOR BLADE AND A WALL OF A TURBINE ENGINE, SURROUNDING SAID ROTOR BLADE
DISPOSITIF DE DÉTERMINATION DE LA DISTANCE ENTRE UNE AUBE MOBILE ET LA PAROI D'UNE TURBOMACHINE, ENTOURANT L'AUBE MOBILE

(30) Priorität: 29.09.2006 DE 102006046696
(43) Veröffentlichungstag der Anmeldung: 10.06.2009
(73) Patentinhaber: Siemens Aktiengesellschaft, 80333 München (DE)
(72) Erfinder: BOSSELMANN, Thomas, 91080 Marloffstein (DE); WILLSCH, Michael, 07745 Jena (DE)
(86) Internationale Anmeldenummer: PCT/EP2007/059048
(87) Internationale Veröffentlichungsnummer: WO 2008/040601

(56) Entgegenhaltungen:
- DE-A1- 19 705 769
- GB-A- 2 055 269
- GB-A- 2 063 001
- US-A- 4 507 658
- US-A- 5 818 242

## Beschreibung

Die Erfindung betrifft eine Vorrichtung zur Abstandsbestimmung zwischen mindestens einer Laufschaufel und einer die mindestens eine Laufschaufel umgebenden Wandung von einer Strömungsmaschine sowie eine Verwendung des Verfahrens. Eine entsprechende Vorrichtung zur Überwachung von Radial- und Axialspalt an Turbomaschinen und eine entsprechende Verwendung der Vorrichtung gehen aus der DE 197 05 769 A1 hervor.

Strömungsmaschinen, wie beispielsweise Dampf- oder Gasturbinen, werden als Wärme-Kraft-Maschinen in der Technik eingesetzt, um eine in einem Gasstrom gespeicherte Energie in eine mechanische Energie, insbesondere in eine Drehbewegung, zu überführen. Um den sicheren Betrieb von derartigen Strömungsmaschinen zu gewährleisten, ist man bestrebt, insbesondere während des Betriebes und somit während der Drehung eines in der Strömungsmaschine angeordneten Schaufelrades, die Laufschaufeln des Schaufelrades kontinuierlich zu überwachen. Dabei ist die exakte Einhaltung des Abstandes der Laufschaufelspitzen, d.h. der radial äußersten Ränder der Laufschaufeln, von der die Laufschaufeln umgebenden Wandung (Radialspalt) sehr wichtig. Es darf aus Sicherheitsgründen ein minimaler Radialspalt nicht unterschritten werden; jedoch führt ein zu großer Radialspalt zu einem unnötig geringen Wirkungsgrad. Neben dem Radialspalt ist besonders bei Schaufelrädern, bei denen die Schaufelreihen mit einem Deckband verkleidet sind, der axiale Abstand zu Wandungsteilen wichtig. Da sich diese Größen durch verschiedene dynamische Einflussfaktoren ändern, ist eine kontinuierliche Überwachung des Radialspaltes und des Axialspaltes während des Betriebes anzustreben. Die Größe des Radialspaltes kann z. B. mittels kapazitiver Sonden überwacht werden, die bis auf Berührung in die Nähe der Schaufelspitzen positioniert werden. Diese Sonden leiden jedoch unter begrenzter Genauigkeit, Ortsauflösung und Lebensdauer.

In der DE 197 05 769 A1 ist eine Vorrichtung zur Überwachung von Radial- und Axialspalt an einer Strömungsmaschine angegeben. Dabei wird ein Mikrowellen-Radarsystem verwendet, welches eine Sende- und Empfangseinheit umfasst, von der aus Mikrowellen mit einer festen Frequenz durch einen Hohlleiter auf ein Schaufelrad der Strömungsmaschine gerichtet werden. Der Hohlleiter wird dabei durch das Gehäuse, das das Schaufelrad umgibt, geführt und dort befestigt. Die Mündung des Hohlleiters ist sehr dicht über den Laufschaufelspitzen des Schaufelrades angeordnet, so dass aus dem Reflex der ausgesandten Mikrowellen bestimmt werden kann, in welchem Abstand sich eine Laufschaufelspitze von dem Hohlleiterende und damit von der die Laufschaufel umgebenden Wandung befindet. Die Bestimmung erfolgt mittels einer Auswertung der Phase der reflektierten Mikrowellen. Die Abstandsbestimmung erfolgt, indem die Phasendifferenz zwischen ausgesandten und reflektierten Mikrowellen bestimmt wird.

Weitere Vorrichtungen sind aus GB-A-2 055 269, GB-A-2 063 001, DE-A1-197 05 769, US 4 507 658 und US 5 818 242 bekannt.

Im Bereich des Schaufelrades innerhalb des Gehäuses können insbesondere in Gasturbinen im Betrieb extreme Bedingungen vorherrschen. Bei Strömungen mit Geschwindigkeiten um 100 m/s und einem Gasdruck im Bereich von 16 bar treten gerade bei Gastrubinen Temperaturen von ca. 1200°C auf. Diese extremen Bedingungen können zumindest insoweit durch den Hohlleiter zur an den Hohlleiter angeschlossenen Sende- und Empfangseinheit durchgreifen, dass diese beschädigt wird.

Der Erfindung liegt nun die Aufgabe zu Grunde, eine entsprechende Vorrichtung und Verwendung der Vorrichtung anzugeben, bei welcher an den Hohlwellenleiter angeschlossenen Geräte vor in der Strömungsmaschine in Betrieb vorherrschenden extremen Bedingungen geschützt sind.

Zur Lösung der Aufgabe wird eine Vorrichtung entsprechend den Merkmalen des unabhängigen Patentanspruchs 1 angegeben. Dementsprechend soll die Vorrichtung zur Bestimmung des Abstands zwischen mindestens einer Laufschaufel und einer die mindestens eine Laufschaufel umgebenden Wandung einer Strömungsmaschine, welche Vorrichtung folgende Teile umfasst, nämlich
- einen Hohlwellenleiter zum Führen elektromagnetischer Wellen mit unterschiedlichen Frequenzen und Aussenden von elektromagnetischen Wellen mit zumindest einer Frequenz durch mindestens eine der Laufschaufel zugewandte Hohlwellenleiteröffnung in Richtung der Laufschaufel,
- mindestens ein Mittel zum Einspeisen der elektromagnetischen Wellen mit unterschiedlichen Frequenzen in den Hohlwellenleiter,
- mindestens ein Mittel zum Empfangen reflektierter Anteile der in den Hohlleiter einzuspeisenden elektromagnetischen Wellen,
   und
- eine Auswerteeinheit zur Auswertung der zu empfangenen reflektierten Anteile der einzuspeisenden elektromagnetischen Wellen, umfassend Mittel zum Vergleich der jeweiligen Phasen der einzuspeisenden elektromagnetischen Wellen mit den Phasen der entsprechenden reflektierten Anteile der einzuspeisenden elektromagnetischen Wellen, wobei mittels der Auswerteeinheit für jede Frequenz ein Phasenvergleichswert ermittelbar ist und aus einem Vergleich der Phasenvergleichswerte der Abstands bestimmbar ist, dahingehende ausgestaltet sein, dass
- der Hohlwellenleiter mit einem Dichtungselement versehen ist, welches
   - für die elektromagnetischen Wellen mit der zumindest einen Frequenz transmittierbar ausgeführt ist, und
   - in Führungsrichtung der elektromagnetischen Wellen zwei sich gegenüberliegende Flächen aufweist.

Der Hohlwellenleiter wird somit mittels der Dichtung gegenüber dem Laufschaufelbereich, in welchem in Betrieb der Strömungsmaschine extreme Bedingungen vorherrschen, versiegelt. Es ist also möglich, eine Abstandsmessung mit elektromagnetischen Wellen vorzunehmen, die mittels eines Hohlwellenleiters in den Laufschaufelbereich durch die Wandung der Strömungsmaschine geführt werden, ohne dass die extremen Bedingungen im Laufschaufelbereich durch den Hohlwellenleiter durchgreifen.

Vorteilhafte Ausgestaltungen der erfindungsgemäßen Vorrichtung gehen aus den von Anspruch 1 abhängigen Ansprüchen hervor. Dabei kann die Ausführungsform nach Anspruch 1 mit den Merkmalen eines der zugeordneten Unteransprüche oder vorzugsweise auch denen aus mehreren Unteransprüchen kombiniert werden. Demgemäß kann die Vorrichtung nach der Erfindung zusätzlich noch folgende Merkmale aufweisen:
- So kann das Dichtungselement im Bereich der Hohlwellenleiteröffnung vorgesehen sein. Somit ist ein größtmöglicher Schutz für den Hohlwellenleiter und der an den Hohlwellenleiter angeschlossenen Geräte, wie beispielsweise der Auswerteeinheit, gewährleistet.
- Vorteilhaft kann zumindest eine der beiden Flächen konvex ausgebildet sein, wobei die elektromagnetischen Wellen mit der zumindest einen Frequenz auf die Laufschaufel fokussiert aussendbar ist. Somit ist es möglich insbesondere die Spitze der Laufschaufel auch lateral aufzulösen, sodass ein Laufschaufelspitzen-Profil bestimmt werden kann.
- Vorteilhaft kann auch zumindest eine der beiden Flächen konkav ausgebildet sein, wobei die elektromagnetischen Wellen mit der zumindest einen Frequenz in Richtung der Laufschaufel gestreut aussendbar ist. Auch mit dieser Ausgestaltungsmaßnahme lässt sich insbesondere die Spitze der Laufschaufel lateral auflösen. Hierbei wird in der Auswerteeinheit bei der Auswertung der an der Laufschaufelspitze gestreuten elektromagnetischen Wellen das bekannte SAR-Verfahren (SAR: Synthetic Aperture Radar) angewendet.
- Es kann hingegen auch günstig sein, wenn die beiden sich gegenüberliegende Flächen des Dichtungselements eben und zueinander parallel ausgebildet sind, wobei das Dichtungselement für elektromagnetische Wellen zumindest einer ersten Frequenz reflektierbar und für elektromagnetische Wellen zumindest einer zweiten Frequenz transmittierbar ausgeführt ist. Das Dichtungselement stellt dabei mit seinen parallel gegenüberstehenden beabstandeten Flächen einen Resonator mit frequenzselektiven Eigenschaften dar. Abhängig vom Abstand beider Flächen werden nur elektromagnetische Wellen mit bestimmten Wellenlängen - der Abstand beider Flächen ist dabei ein ganzzahliges Vielfache der halben Wellenlänge - durch das Dichtungselement hindurch transmittiert. Elektromagnetische Wellen mit dazwischen liegenden Wellenlängen werden hingegen vom Dichtungselement reflektiert. Werden in der Auswertung die Phasenvergleichswerte der vom Dichtungselement reflektierten Anteile und der durch das Dichtungselement transmittierten und an den Laufschaufeln reflektierter Anteile der einzuspeisenden elektromagnetischen Wellen miteinander verglichen, kann ein temperaturkompensierten Abstandswert zwischen der Laufschaufel und der die Laufschaufel umgebenden Wandung der Strömungsmaschine ermittelt werden. Eine temperaturbedingte Ausdehnung des Hohlleiters wird hierbei rechnerisch kompensiert.
- Es kann von Vorteil sein, wenn das Dichtungselement eine Dielektrizitätskonstante ε im Bereich von 6 bis 20, insbesondere 9 bis 15 aufweist. So kann mit wenig technischem Aufwand am Dichtungselement der Strahlengang der elektromagnetischen Wellen im Hohlwellenleiter mittels des Dichtungselements beeinflusst werden. Ist das Dichtungselement als Resonator ausgebildet, ist darüber hinaus eine genügend hohe Reflektivität der Dichtungselementflächen (d.h. der Resonatorflächen) garantiert.
- Dabei kann es günstig sein, wenn das Dichtungselement aus einer Keramik, insbesondere Al₂O₃, ausgeführt ist. Damit ist eine sehr gute Temperaturbeständigkeit des Dichtungselements gewährleistet.
- Günstigerweise können die elektromagnetischen Wellen Millimeterwellen, insbesondere im Frequenzbereich von 70 GHz bis 150 GHz, sein. Da die Wellenlängen bei diesen Frequenzen ca. 4 Millimeter und weniger betragen, können hiermit sehr kompakte Hohlwellenleiter zum Einsatz kommen, deren Querschnittsabmessungen typischerweise in der Größenordnung der zu führenden Wellenlängen zu wählen sind.

Mit der Erfindung wird ferner eine Verwendung der erfindungsgemäßen Vorrichtung zur Bestimmung des Abstands zwischen mindestens einer Laufschaufel und einer die mindestens eine Laufschaufel umgebenden Wandung einer als Gasturbine ausgeführten Strömungsmaschine , entsprechend den Merkmalen des unabhängigen Patentanspruchs 6 angegeben.
- Der Hohlwellenleiter kann dabei vorteilhafterweise in einem Kühlkanal der Wandung angeordnet sein. Somit kann zur Installation der erfindungsgemäßen Vorrichtung eines von vielen bereits in der Wandung zur Kühlung vorgesehenen Kühlkanälen verwendet werden.

Bevorzugte, jedoch keinesfalls einschränkende Ausführungsbeispiele der Vorrichtung werden nunmehr anhand der Zeichnung näher erläutert. Zur Veranschaulichung ist die Zeichnung nicht maßstäblich ausgeführt und gewisse Merkmale sind schematisiert dargestellt. Im Einzelnen zeigen
- Figur 1: eine Gasturbine des Stands der Technik in einer teilweise aufgeschnittenen, perspektivischen Ansicht,
- Figur 2: eine Laufschaufel der Gasturbine aus Figur 1,
- Figur 3: eine schematische Darstellung der erfindungsgemäßen Vorrichtung mit einem als Resonator ausgeführten Dichtungselement,
- Figur 4: eine schematische Darstellung einer Vorrichtung mit einem als Linse mit konvexen Flächen ausgeführten Dichtungselement, und
- Figur 5: eine schematische Darstellung einer Vorrichtung mit einem als Linse mit konkaven Flächen ausgeführten Dichtungselement.

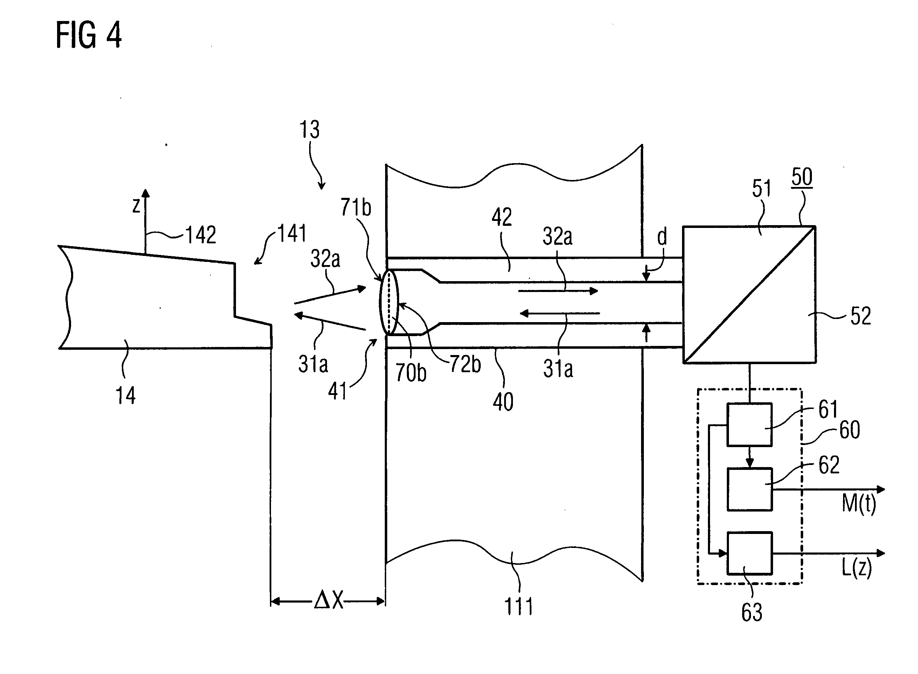

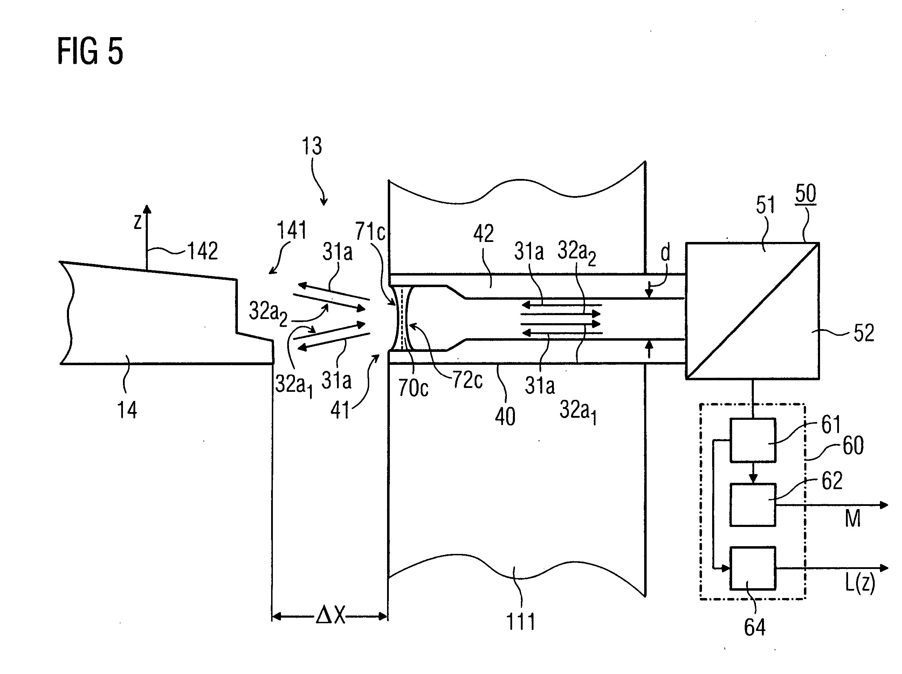

**Bei dem Beispiel gemäß** **Figur 4** **bzw.** **Figur 5****, handelt es sich nicht um eine erfindungsgemäße Vorrichtung.**

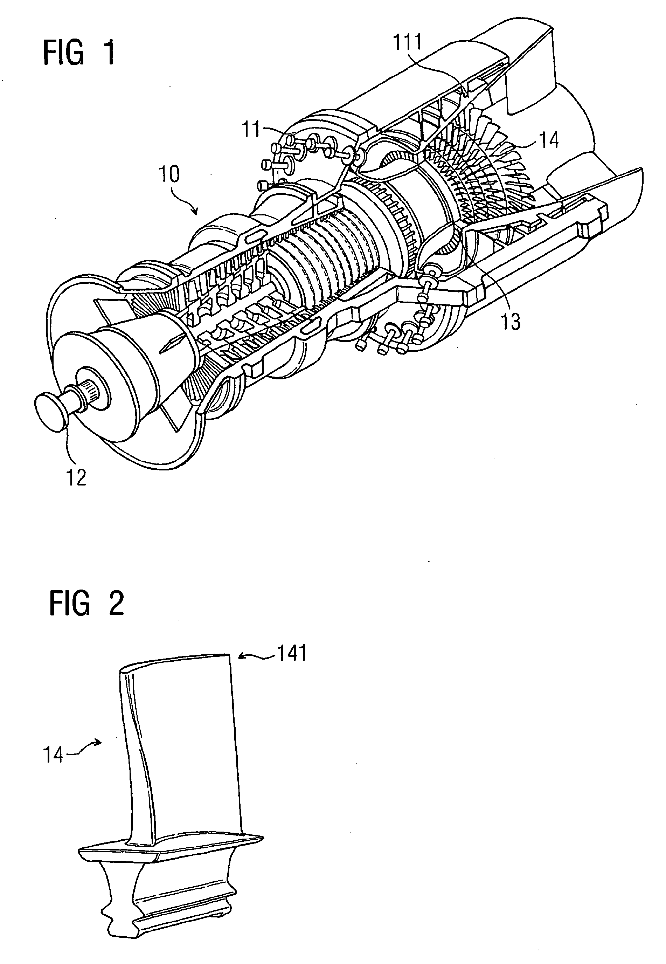

Einander entsprechende Teile sind in den Figuren 1 bis 5 mit denselben Bezugszeichen versehen.

In Figur 1 ist eine Gasturbine 10 des Standes der Technik dargestellt, die für eine hohe Gaseintrittstemperatur von ca. 1200°C konzipiert ist. In einem Gehäuse 11 mit innerer Wandung 111 weist die Gasturbine 10 eine drehbar gelagerte Rotorwelle 12 auf, an welcher Laufschaufeln 14 in einem Strömungskanal 13 angeordnet sind.

In Figur 2 ist eine solche Laufschaufel 14 im ausgebauten Zustand detaillierter dargestellt. Das obere Ende der Laufschaufel 14, die so genannte Laufschaufelspitze 141, ist im eingebauten Zustand der inneren Wandung 111 des Gasturbinengehäuses 11 zugewandt.

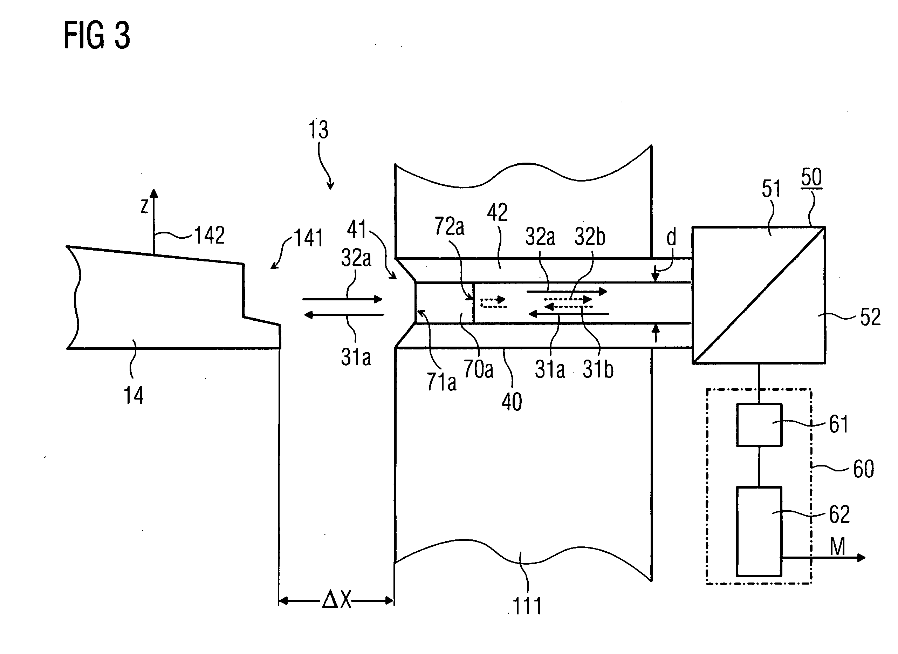

In Figur 3 ist eine schematische Darstellung der erfindungsgemäßen Vorrichtung in einem ersten Ausführungsbeispiel dargestellt. Der Einfachheit halber ist nur ein Teil einer Laufschaufel 14 schemenhaft gezeigt. Mit dem Pfeil 142 ist angedeutet, dass sich die Laufschaufel 14 während einer Abstandsmessung in Betrieb der Gasturbine 10 in Richtung des Pfeils 142 bewegt. In erster Näherung kann die Bewegung in Pfeilrichtung als lineare Bewegung in lateraler Richtung z betrachtet werden. Die Laufschaufelspitze 141 ist in einem radialem Abstand Δx von der inneren Wandung 111 des Gasturbinengehäuses 11 beabstandet. Um einen möglichst guten Wirkungsgrad der Gasturbine 10 zu gewährleisten, ist der Abstand Δx zwischen den Enden der Laufschaufeln 14, d.h. den Laufschaufelspitzen 141, und der inneren Wandung 111 des Gasturbinengehäuses 11 möglichst gering und liegt typischerweise in einem Bereich von wenigen Millimetern, insbesondere zwischen 1 mm und 20 mm. Die Wandung 111 weist mindestens eine Öffnung auf, in welche formschlüssig ein Hohlwellenleiter 40 angeordnet ist. Vorteilhafterweise ist der Hohlwellenleiter 40 in einem von zahlreichen in der Wandung 111 bereits vorhandenen Kühlkanälen eingebracht. Der Holwellenleiter 40 ist rohrförmig ausgestaltet und weist beispielsweise einen runden oder rechteckigen Querschnitt mit einem Innendurchmesser d im Bereich von 2 bis 10 mm auf. Die Wandung 42 des Holwellenleiters 40 besteht typischerweise aus einem leitfähigen Material, wie beispielsweise Stahl. Insbesondere ist ein Ende des Hohlwellenleiter 40, welches mit einer Öffnung 41 versehen ist, derart in der Wandung 111 angeordnet, dass er nicht bzw. möglichst wenig in den Strömungskanal 13 der Gasturbine 10 hineinragt, um die Gasströmung im Strömungskanal 13 minimal zu beeinflussen. Im Bereich der Hohlleiteröffnung 41 ist gemäß dem Ausführungsbeispiel in Figur 3 ein Dichtungselement 70a mit zwei parallel zueinander angeordneten ebenen Flächen 71a, 72a formschlüssig mit dem inneren Querschnitt des Hohlwellenleiters 40 in diesem angeordnet. Das Dichtungselement 70a dichtet dabei den Hohlwellenleiter 40 gegenüber dem Strömungskanal 13 ab. Das Dichtungselement 70a ist vorteilhafterweise aus einer für elektromagnetische Strahlung zumindest zum Teil transparenten Keramik, insbesondere Al₂O₃, ausgestaltet. Die Dielektrizitätskonstante ε der Keramik sollte dabei insbesondere im Bereich von 6 bis 20, vorzugsweise 9 bis 15, liegen. Das andere Ende des Hohlwellenleiters 40 ist an eine Sende-/Empfangseinheit 50 angeschlossen, welche Mittel zum Einspeisen 51 und Empfangen 52 von elektromagnetischen Wellen 31a, 31b, 32a, 32b, insbesondere Mikrowellen im Frequenzbereich von 70 GHz bis 150 GHz, umfasst. Die Sende-/Empfangseinheit 50 ist weiter mit einer Auswerteeinheit 60 verbunden.

Im Einzelnen läuft eine Abstandsbestimmung folgendermaßen ab:

Die Sende-/Empfangseinheit 50 speist elektromagnetische Wellen 31a, 31b mit beispielsweise zwei unterschiedlichen Frequenzen a und b in den Hohlwellenleiter 40. Vorteilhafterweise unterscheiden sich beide Frequenzen a und b höchstens um 55 % und mindestens um 5 %, so dass die zugeordneten elektromagnetischen Wellen 31a, 31b von demselben Hohlwellenleiter 40 geführt werden können. Als Einspeisemittel 51 können dabei ein bifrequentes Einspeisemittel 51 oder auch zwei jeweils einer Frequenz a bzw. b zugeordnete Sendemittel, welche über eine Weiche mit dem Hohlwellenleiter 40 verbunden sind (in den Figuren nicht dargestellt), verwendet werden. Das Dichtungselement 70a stellt aufgrund seiner Ausgestaltung mit seinen beiden parallelen, ebenen Flächen 71a, 72a für elektromagnetische Strahlung 31a bestimmter Frequenzen a einen Resonator dar. Ist der Abstand beider gegenüberliegender Flächen 71a, 72a, welche in Führungs- bzw. Ausbreitungsrichtung der elektromagnetischen Wellen 31a, 32a im Hohlwellenleiter 40 ausgerichtet sind (d.h. deren Oberflächennormalen fallen mit der Ausbreitungsrichtung der elektromagnetischen Wellen zusammen), ein Vielfaches der halben Wellenlänge einer auf den Resonator treffenden elektromagnetischen Welle 31a, wird diese innerhalb des Resonators mehrfach reflektiert und zumindest anteilig in Richtung Laufschaufel 14 emittiert. Das Dichtungselement 70a kann somit als transmittierend für eine elektromagnetische Welle mit dieser Frequenz a betrachtet werden. Hingegen werden elektromagnetische Wellen 31b mit einer dazwischen liegenden Frequenz b schon von der ersten Dichtungselementfläche 72a, auf welche die elektromagnetischen Wellen 31b nach dem Einspeisen in den Hohlwellenleiter 40 treffen, zurück zur Sende-/Empfangseinheit 50 reflektiert. Somit stellt das Dichtungselement 70a gemäß dem Ausführungsbeispiel in Figur 3 ein frequenzselektives Element dar, dessen Transmissions- und Reflektionseigenschaft frequenzabhängig sind.

Elektromagnetische Wellen 31a mit der Frequenz a werden also gemäß dem Ausführungsbeispiel in Figur 3 durch das Dichtungselement 70a transmittiert, während elektromagnetische Wellen 31b mit Frequenzen b zur Sende-/Empfangseinheit 50 zurück reflektiert werden. Die transmittierten Wellen 31a werden dabei anschließend durch die Hohlwellenleiteröffnung 41 hindurch in Richtung der Laufschaufel 14 ausgesendet. Nach Zurücklegen des Abstandes Δx wird wenigstens ein Anteil 32a der ausgesandten elektromagnetischen Wellen 31a von den Laufschaufelspitzen 141 zum Hohlwellenleiter 40 reflektiert, durchquert wieder das Dichtungselement 70a in entgegengesetzter Richtung und wird daraufhin vom Hohlleiter 40 der Sende-/Empfangseinheit 50 zugeführt. Mittels beispielsweise einer Empfangsdiode als Mittel 52 zum Empfangen von elektromagnetischen Wellen wird der reflektierte Anteil 32a, 32b der ausgesandten beispielsweise bifrequenten elektromagnetischen Wellen 31a, 31b detektiert und in entsprechende elektrische Signale gewandelt, die der Auswerteeinheit 60 zugeführt werden. Mittels der Auswerteeinheit 60 werden aus den elektrischen Signalen zunächst die Phasenwerte ϕᵣa und ϕᵣb der den beiden Frequenzen a und b zugeordneten elektromagnetischen Wellen 32a, 32b bestimmt. Als nächstes werden mit einem Phasenvergleichsmittel 61 die jeweiligen Phasen ϕ₀a, ϕ₀b der ausgesandten elektromagnetischen Wellen 31a, 31b mit den Phasen ϕᵣa, ϕᵣb der entsprechenden reflektierten Anteile 32a, 32b der ausgesandten elektromagnetischen Wellen 31a, 31b verglichen. Der jeweilige Phasenvergleichswert Δϕa bzw. Δϕb, der beispielsweise durch einen Phasendifferenzwert Δϕa = ϕᵣa - ϕ₀a bzw. Δϕb = ϕᵣb - ϕ₀b bestimmt wird, ist dabei direkt abhängig von der zurückgelegten Strecke der vom Einspeisemittel 51 eingespeisten elektromagnetischen Wellen 31a, 31b. Neben dem zu bestimmenden Abstand Δx der Laufschaufelspitze 141 zur Wandung 111 bzw. zur Hohlwellenleiteröffnung 41 kann auch der Abstand zwischen Dichtungselement 70a und Sende-/Empfangseinheit 50 aufgrund einer temperaturabhängigen Ausdehnung der Wandung 111 und damit auch des Hohlwellenleiters 40 temperaturbedingt variieren, sodass die gewünschte Abstandsbestimmung ungenau wird. Durch Vergleich, beispielsweise durch Subtraktion, der Phasenvergleichswerte Δϕa bzw. Δϕb der von der Laufschaufelspitze 141 reflektierten Anteile 32a der eingespeisten elektromagnetischen Wellen 31a, 31b mit den von dem Dichtungselement reflektierten Anteilen 32b kann diese temperaturbedingte Ungenauigkeit kompensiert werden. Dieser derart gewonnene Vergleichswert Δϕab wird dann mit einem weiteren Zuordnungsmittel 62 einem Messwert M für den Abstands Δx zwischen Laufschaufelspitze 141 und Wandung 111 zugeordnet. Die Zuordnung kann beispielsweise mit Hilfe einer Wertetabelle oder auch einem geeigneten Algorithmus erfolgen.

Der ermittelte Messwert M für den Abstand Δx der mindestens einen Laufschaufel 14 wird über nicht näher dargestellte Anzeige- bzw. Meldeeinheiten an eine überwachende Stelle gemeldet bzw. an eine Zentrale weitergeleitet.

Die Auswerteeinheit 60 kann auch mit einer Vergleichsfunktion ausgestattet sein, mit der das Unterschreiten eines vorgebbaren Abstandsschwellwertes feststellbar ist. So kann beispielsweise bei Unterschreiten des Schwellwertes eine Meldung automatisch ausgegeben werden, um eine geeignete Schutzmaßnahme, wie beispielsweise das Abschalten der Gasturbine 10 einzuleiten.

In Figur 4 und Figur 5 sind zwei Beispiele für weitere Vorrichtungen schematisch dargestellt.

In beiden Beispielen ist das Dichtungselement 70b, 70c im Bereich der Hohlwellenleiteröffnung 41 mit beidseitig gekrümmten Flächen 71b, 72b, 71c, 72c ausgebildet. Während in Figur 4 beide Flächen 71b, 72b konvex gekrümmt sind, weist das Dichtungselement gemäß Figur 5 zwei konkave Flächen 71c, 72c auf. In beiden Fällen nimmt das Dichtungselement 70b, 70c die Funktion einer Linse für die von der Sende-/Empfangseinheit 50 in den Hohlwellenleiter 40 eingespeisten elektromagnetischen Wellen 31a ein.

Mittels des Dichtungselements 70b mit konvex gekrümmten Flächen 71b, 72b gemäß Figur 4 ist es möglich, die in den Hohlwellenleiter 40 eingespeisten elektromagnetischen Wellen 31a auf die Laufschaufelspitze 141 zu fokussieren. Somit wird bei Auswertung der von einem eng begrenzten durch den Fokus bestimmten Bereich auf der Laufschaufelspitze 141 rückgestreuten elektromagnetischen Wellen 32a der Abstand Δx bezüglich dieses Bereichs bestimmt. Da sich in einem darauf folgenden Zeitfenster die Laufschaufel 14 in Betrieb der Gasturbine 10 in Pfeilrichtung z weiterbewegt, wird sich aufgrund der Profilierung der Laufschaufelspitze 141 in diesem nächsten Zeitfenster der Abstand Δx profilierungsbedingt ändern.

Mittels der beispielsweise vorgenannten Empfangsdiode als Mittel 52 zum Empfangen von elektromagnetischen Wellen wird der reflektierte Anteil 32a der ausgesandten elektromagnetischen Wellen 31a detektiert und in entsprechende elektrische Signale gewandelt, die der Auswerteeinheit 60 zugeführt werden. Mittels der Auswerteeinheit 60 werden aus den elektrischen Signalen zunächst der profilbedingt zeitabhängige Phasenwert ϕᵣa(t) der elektromagnetischen Wellen 32a bestimmt. Als nächstes werden mit einem Phasenvergleichsmittel 61 die konstante Phase ϕ₀a der ausgesandten elektromagnetischen Wellen 31a mit der zeitabhängigen Phase ϕᵣa(t) des reflektierten Anteils 32a der ausgesandten elektromagnetischen Wellen 31a verglichen. Der zeitabhängige Phasenvergleichswert Δϕa(t), der beispielsweise durch einen Phasendifferenzwert Δϕa(t) = ϕᵣa(t) - ϕ₀a bestimmt wird, ist dabei direkt abhängig von der zurückgelegten Strecke der vom Einspeisemittel 51 eingespeisten elektromagnetischen Wellen 31a. Dieser Phasenvergleichswert Δϕa(t) wird dann mit einem Zuordnungsmittel 62 einem zeitabhängigen Messwert M(t) für den Abstands Δx zwischen Laufschaufelspitze 141 und Wandung 111 zugeordnet. Die Zuordnung kann beispielsweise mit Hilfe einer Wertetabelle oder auch einem geeigneten Algorithmus erfolgen.

Zur Bestimmung des Laufschaufelspitzenprofils weist die Auswerteeinheit 60 zusätzlich ein Zuordnungsmittel 63 auf, mit welchem der gewonnene zeitabhängige Phasenvergleichswert Δϕa(t) einem ortsaufgelösten Laufschaufelspitzenprofil L(z) in lateraler Richtung z zugeordnet wird.

Mittels des Dichtungselements 70c mit konkav gekrümmten Flächen 71c, 72c gemäß Figur 5 ist es möglich, die in den Hohlwellenleiter 40 eingespeisten elektromagnetischen Wellen 31a gestreut in Richtung der Laufschaufelspitze 141 auszusenden. Somit wird bei Auswertung der von der gesamten Laufschaufelspitze 141 rückgestreuten elektromagnetischen Wellen 32a der Abstand Δx bestimmt. Aufgrund der Profilierung der Laufschaufelspitze 141 ergeben sich in der Gesamtheit aller rückgestreuten Wellenanteile 32aᵢ (i = natürliche Zahl; in Figur 5: i = 1, 2) unterschiedliche Phasenwerte ϕᵣaᵢ für die rückgestreuten Wellenanteile 32aᵢ. Aus diesem profilierungsbedingten Phasenunterschied der rückgestreuten Wellenanteile 32aᵢ lässt sich dann auf das Profil der Laufschaufelspitze 141 schließen.

Mittels der beispielsweise vorgenannten Empfangsdiode als Mittel 52 zum Empfangen von elektromagnetischen Wellen wird der reflektierte Anteil 32aᵢ der ausgesandten elektromagnetischen Wellen 31a detektiert und in entsprechende elektrische Signale gewandelt, die der Auswerteeinheit 60 zugeführt werden. Mittels der Auswerteeinheit 60 werden zunächst aus den elektrischen Signalen profilbedingt ein Ensemble i von Phasenwerten ϕᵣaᵢ der elektromagnetischen Wellen 32aᵢ bestimmt. Als nächstes werden mit einem Phasenvergleichsmittel 61 die konstante Phase ϕ₀a der ausgesandten elektromagnetischen Wellen 31a mit den verschiedenen Phasen ϕᵣaᵢ des reflektierten Anteils 32aᵢ verglichen. Die unterschiedlichen Phasenvergleichswerte Δϕaᵢ, die beispielsweise durch Phasendifferenzwerte Δϕaᵢ = ϕᵣaᵢ - ϕ₀a bestimmt werden, sind dabei direkt abhängig von der zurückgelegten Strecke der vom Einspeisemittel 51 eingespeisten elektromagnetischen Wellen 31a. Diese Phasenvergleichswerte Δϕaᵢ werden dann mit einem Zuordnungsmittel 62 einem Messwert M für den Abstands Δx zwischen Laufschaufelspitze 141 und Wandung 111 zugeordnet. Die Zuordnung kann beispielsweise mit Hilfe einer Wertetabelle oder auch einem geeigneten Algorithmus erfolgen.

Zur Bestimmung des Laufschaufelspitzenprofils wird das bekannte SAR-Verfahren (SAR: Synthetic Aperture Radar) angewendet. Hierzu weist die Auswerteeinheit 60 zusätzlich ein weiteres Zuordnungsmittel 64 auf, mit welchem die gewonnene profilabhängigen Phasenvergleichswerte Δϕaᵢ einem ortsaufgelösten Laufschaufelspitzenprofil L(z) in lateraler Richtung z zugeordnet werden.

Die vorliegende Erfindung ist nicht auf die dargestellten Ausführungsbeispiele beschränkt anzusehen. Ebenso in den Schutzbereich hineingehörend ist, dass auch mehrere Hohlwellenleiter 40 zum Aussenden und/oder für den Empfang vorgesehen sind, um beispielsweise eine Redundanz der Messung oder auch eine höhere Genauigkeit zu erreichen.

## Patentansprüche

1. Vorrichtung zur Bestimmung des Abstands (Δx) zwischen mindestens einer Laufschaufel (14) und einer die mindestens eine Laufschaufel (14) umgebenden Wandung (111) einer Strömungsmaschine (10), welche Vorrichtung folgende Teile umfasst, nämlich
- einen Hohlwellenleiter (40) zum Führen elektromagnetischer Wellen (31a, 31b, 32a, 32b) mit unterschiedlichen Frequenzen und Aussenden von elektromagnetischen Wellen (31a) mit zumindest einer Frequenz durch mindestens eine der Laufschaufel (14) zugewandte Hohlwellenleiteröffnung (41) in Richtung der Laufschaufel (14),
- mindestens ein Mittel (51) zum Einspeisen der elektromagnetischen Wellen (31a, 31b) mit unterschiedlichen Frequenzen in den Hohlwellenleiter (40),
- mindestens ein Mittel (52) zum Empfangen reflektierter Anteile (32a, 32b) der in den Hohlleiter (40) einzuspeisenden elektromagnetischen Wellen (31a, 31b),
und
eine Auswerteeinheit (60) zur Auswertung der zu empfangenen reflektierten Anteile (32a, 32b) der einzuspeisenden elektromagnetischen Wellen (31a, 31b), umfassend Mittel (61) zum Vergleich der jeweiligen Phasen der einzuspeisenden elektromagnetischen Wellen (31a, 31b) mit den Phasen der entsprechenden reflektierten Anteile (32a, 32b) der einzuspeisenden elektromagnetischen Wellen (31a, 31b), wobei mittels der Auswerteeinheit für jede Frequenz ein Phasenvergleichswert ermittelbar ist und aus einem Vergleich der Phasenvergleichswerte der Abstands (Δx) bestimmbar ist, wobei
- der Hohlwellenleiter (40) mit einem Dichtungselement (70a, 70b, 70c) versehen ist, welches
- für die elektromagnetischen Wellen (31a, 32a) mit der zumindest einen Frequenz transmittierbar ausgeführt ist, und
- in Führungsrichtung der elektromagnetischen Wellen (31a, 31b, 32a, 32b) zwei sich gegenüberliegende Flächen (71a, 71b, 71c, 72a, 72b, 72c) aufweist,
**dadurch gekennzeichnet, dass**
die beiden sich gegenüberliegende Flächen (71a, 72a) des Dichtungselements (70a) eben und zueinander parallel ausgebildet sind, wobei das Dichtungselement (70a) für elektromagnetische Wellen (31b, 32b) zumindest einer ersten Frequenz reflektierbar und für elektromagnetische Wellen (31a, 32a) zumindest einer zweiten Frequenz transmittierbar ausgeführt ist, und wobei
die Auswerteeinheit (60) weiterhin ausgestaltet ist, aus einem Vergleich der Phasenvergleichswerte der vom Dichtungselement reflektierten Anteile und der durch das Dichtungselement transmittierten und an den Laufschaufeln reflektierter Anteile der einzuspeisenden elektromagnetischen Wellen einen temperaturkompensierten Abstand (Δx) zu bestimmen.

2. Vorrichtung nach Anspruch 1, **dadurch gekennzeichnet, dass** das Dichtungselement (70a, 70b, 70c) im Bereich der Hohlwellenleiteröffnung (41) vorgesehen ist.

3. Vorrichtung nach einem der vorangehenden Ansprüche, **dadurch gekennzeichnet, dass** das Dichtungselement (70a, 70b, 70c) eine Dielektrizitätskonstante ε im Bereich von 6 bis 20 aufweist.

4. Vorrichtung nach Anspruch 3, **dadurch gekennzeichnet, dass** das Dichtungselement (70a, 70b, 70c) aus einer Keramik, insbesondere Al₂O₃, ausgeführt ist.

5. Vorrichtung nach einem der vorangehenden Ansprüche, **dadurch gekennzeichnet, dass** die elektromagnetischen Wellen (31a, 31b, 32a, 32b) Millimeterwellen, insbesondere im Frequenzbereich von 70 GHz bis 150 GHz, sind.

6. Verwendung der Vorrichtung nach einem der vorangehenden Ansprüche zur Bestimmung des Abstands (Δx) zwischen mindestens einer Laufschaufel (14) und einer die mindestens eine Laufschaufel (14) umgebenden Wandung (111) einer als Gasturbine ausgeführten Strömungsmaschine (10).

7. Verwendung nach Anspruch 6, **dadurch gekennzeichnet, dass** der Hohlwellenleiter (40) in einem Kühlkanal der Wandung (111) angeordnet ist.

## Claims

1. Device for determining the distance (Δx) between at least one rotor blade (14) and a wall (111) of a turbine engine (10), said wall surrounding the at least one rotor blade (14), which device comprises the following parts:
- a waveguide (40) for guiding electromagnetic waves (31a, 31b, 32a, 32b) having different frequencies and emitting electromagnetic waves (31a) having at least one frequency in the direction of the rotor blade (14) through at least one waveguide opening (41) which faces the rotor blade (14),
- at least one means (51) for injecting the electromagnetic waves (31a, 31b) having different frequencies into the waveguide (40),
- at least one means (52) for receiving reflected portions (32a, 32b) of the electromagnetic waves (31a, 31b) to be injected into the waveguide (40),
and
an evaluation unit (60) for evaluating the reflected portions (32a, 32b) to be received of the electromagnetic waves (31a, 31b) to be injected, comprising means (61) for comparing the respective phases of the electromagnetic waves (31a, 31b) to be injected with the phases of the corresponding reflected portions (32a, 32b) of the electromagnetic waves (31a, 31b) to be injected, wherein a phase comparison value can be ascertained for each frequency by means of the evaluation unit and the distance (Δx) can be determined from a comparison of the phase comparison values, wherein
- the waveguide (40) is provided with a sealing element (70a, 70b, 70c) which
- is embodied as transmissible for the electromagnetic waves (31a, 32a) having the at least one frequency, and
- has two surfaces (71a, 71b, 71c, 72a, 72b, 72c) disposed opposite each other in the guide direction of the electromagnetic waves (31a, 31b, 32a, 32b), **characterised in that**
the two mutually opposing surfaces (71a, 72a) of the sealing element (70a) are embodied as flat and parallel to each other, the sealing element (70a) being embodied as reflectable for electromagnetic waves (31b, 32b) of at least one first frequency and transmissible for electromagnetic waves (31a, 32a) of at least one second frequency, and
the evaluation unit (60) can furthermore be embodied to determine a temperature-compensated distance (Δx) from a comparison of the phase comparison values of the portions of the electromagnetic waves to be injected that are reflected by the sealing element and the portions of the electromagnetic waves to be injected that are transmitted through the sealing element and reflected at the rotor blades.

2. Device according to claim 1, **characterised in that** the sealing element (70a, 70b, 70c) is provided in the region of the waveguide opening (41).

3. Device according to one of the preceding claims, **characterised in that** the sealing element (70a, 70b, 70c) has a dielectric constant ε in the range from 6 to 20.

4. Device according to claim 3, **characterised in that** the sealing element (70a, 70b, 70c) is embodied from a ceramic, in particular Al₂O₃.

5. Device according to one of the preceding claims, **characterised in that** the electromagnetic waves (31a, 31b, 32a, 32b) are millimetre waves, in particular in the frequency range from 70 GHz to 150 GHz.

6. Use of the device according to one of the preceding claims for determining the distance (Δx) between at least one rotor blade (14) and a wall (111), surrounding the at least one rotor blade (14), of a turbine engine (10) embodied as a gas turbine.

7. Use according to claim 6, **characterised in that** the waveguide (40) is arranged in a cooling channel of the wall (111).

## Revendications

1. Dispositif de détermination de la distance (Δx) entre au moins une aube (14) mobile et une paroi (111) d'une turbomachine (110) entourant là au moins une aube (14) mobile, lequel dispositif comprend les parties suivantes, à savoir :
- un guide d'ondes (40) pour guider des ondes (31a, 31b, 32a, 32b) électromagnétiques de fréquences différentes et pour l'émission d'ondes (31a) électromagnétiques ayant au moins une fréquence par au moins une ouverture (41) de guide d'ondes tournée vers l'aube (14) mobile dans la direction de l'aube (14) mobile,
- au moins un moyen (51) d'injection des ondes (31a, 31b) électromagnétiques de fréquences différentes dans le guide d'ondes (40)
- au moins un moyen (52) de réception de parties (32a, 32b) réfléchie des ondes (31a, 31b) électromagnétiques injectées dans le guide d'ondes (40)
et
une unité (60) d'exploitation pour exploiter les parties (32a,32b) réfléchies des ondes (31a, 31b) électromagnétiques injectées, comprenant un moyen (61) de comparaison des phases respectives des ondes (31a, 31b) électromagnétiques injectées aux phases des parties (32a, 32b) réfléchies correspondantes des ondes (31a, 31b) électromagnétiques injectées, dans lequel, au moyen de l'unité d'exploitation, on peut déterminer pour chaque fréquence une valeur de comparaison des phases et on peut déterminer la distance Δx à partir d'une comparaison des valeurs de comparaison des phases, dans lequel
- le guide d'ondes de (40) est pourvu d'un élément (70a, 70b, 70c) d'étanchéité, lequel
- est réalisé de manière à pouvoir transmettre pour les ondes (31a, 32a) électromagnétiques ayant là au moins une fréquence,
et
- a, dans la direction de guidage des ondes (31a, 31b, 32a, 32b) électromagnétiques deux surfaces (71a, 71b, 71c, 72a, 72b, 72c) opposées.
**caractérisé en ce que**
les deux surfaces (71a, 72a) opposées de l'élément (70a) d'étanchéité sont planes et parallèles entre elles, l'élément (70a) d'étanchéité étant réalisé de manière à pouvoir réfléchir pour des ondes (31b, 32b) électromagnétiques d'au moins une première fréquence et de manière à pouvoir transmettre pour des ondes (31a, 32a) électromagnétiques d'au moins une deuxième fréquence, et dans lequel l'unité (60) d'exploitation est conformée en outre pour déterminer, à partir d'une comparaison des valeurs de comparaison des phases des parties réfléchies par l'élément d'étanchéité et des parties transmises par l'élément d'étanchéité et réfléchies sur les aubes mobiles des ondes électromagnétiques injectées, une distance Δx compensée en température.

2. Dispositif suivant la revendication 1 **caractérisée en ce que** l'élément (70a, 70b, 70c) d'étanchéité est prévu dans la région de l'ouverture (41) du guide d'ondes.

3. Dispositif suivant l'une des revendications précédentes **caractérisé en ce que** l'élément (70b, 70b, 70c) d'étanchéité a une constante ε diélectrique de l'ordre de 6 à 20.

4. Dispositif suivant la revendication 3 **caractérisé en ce que** l'élément (70a, 70b, 70c) d'étanchéité est en céramique, notamment en Al₂O₃.

5. Dispositif suivant l'une des revendications précédentes **caractérisé en ce que** les ondes (31a, 31b, 32a, 32b) électromagnétiques sont des ondes millimétriques, notamment dans la plage de fréquence de 70 GHz à 150 GHz.

6. Utilisation du dispositif suivant l'une des revendications précédentes pour la détermination de la distance (Δx) entre au moins une aube (14) mobile et une paroi (111) d'une turbomachine (10) réalisée en turbine à gaz, entourant là au moins une aube (14) mobile.

7. Utilisation du dispositif suivant la revendication 6 caractérisé en que le guide d'ondes (40) est disposé dans un canal de refroidissement de la paroi (111).
